# EUROPÄISCHE PATENTANMELDUNG

(11) **EP 2 204 606 A2**
(43) Veröffentlichungstag der Anmeldung: **07.07.2010**
(21) Anmeldenummer: 10157729.4
(22) Anmeldetag: 25.09.2009
(51) Int. Cl.: F21S 11/00, G02B 6/00, G02B 6/32, G02B 17/08

(54) **Vorrichtung zur Einkopplung von Sonnenlicht in Lichtleiter**

(30) Priorität: 25.11.2008 DE 102008058576
(62) Teilanmeldung aus: 09171374.3
(71) Anmelder: Georg-Simon-Ohm Hochschule für angewandte Wissenschaften Fachhochschule Nürnberg, 90489 Nürnberg (DE)
(72) Erfinder: Kist, Alexander, 90552 Röthenbach (DE); Schütz, Sebastian, 90478 Nürnberg (DE); Killermann, Michael, 90469 Nürnberg (DE); Poisel, Hans, 91227 Leinburg (DE); Hofbeck, Klaus, 92318 Neumarkt (DE); Bloos, Martin, 90471 Nürnberg (DE); Schilling, Harry, 85072 Eichstätt (DE)
(74) Vertreter: Lohr, Georg

(57) **Zusammenfassung**

Ein Koppler zur Einkopplung von Sonnenstrahlen in Lichtwellenleitern umfasst einen lichtleitenden Körper mit einer Linse und einer oder mehreren Konzentrationsstufen, um das Sonnenlicht in einen Lichtwellenleiter zu konzentrieren. Er besteht aus einem Stück und hat einen fest angeschlossenen Lichtwellenleiter. Dadurch ergibt sich eine kompakte und robuste Einheit.

## Beschreibung

### Technisches Gebiet

Die Erfindung betrifft eine Vorrichtung zur Einkopplung von Sonnenlicht in Lichtleiter, insbesondere in Lichtleitende Fasern. Das Sonnenlicht kann dann durch die Lichtleiter beispielsweise in Gebäude geführt und dort als passive Beleuchtung eingesetzt werden.

### Stand der Technik

Passive Sonnenkollektoren, welche die Sonnenstrahlung in ein Lichtleiterbündel einkoppeln, so dass das durch diese Lichtleiter geführte Licht an anderer Stelle wieder zu Beleuchtungszwecken, z.B. zur inneren Beleuchtung eines Hauses, verwendet werden kann, werden bevorzugt mit modularen Lichtsammelelementen bestückt. So bietet es sich an, für jeden Lichtleiter eines Lichtleiterbündels ein eigenes Lichtsammelelement vorzusehen.

In der US 4,717,227 ist ein modular aufgebauter Kollektor für Sonnenstrahlen offenbart. Er umfasst einzelne Lichtsammelelemente, die die einfallende Sonnenstrahlung mittels einer Linse in einen Lichtwellenleiter bündeln. Ein zentrales Stützelement nimmt auf einer Seite eine Ferrule zur Halterung der lichtleitenden Faser und auf der anderen Seite eine Linse auf. Im Inneren dieses Elements ist ein Hohlraum. Nachteilig an dieser Anordnung sind die hohe Anzahl an Bauelementen und die hohe Komplexität, welche zu hohen Fertigungskosten führen. Durch den Wechsel des Strahlenganges zwischen verschiedenen Medien an den Grenzen des Hohlraumes entstehen Einkoppelverluste. Ein weiterer Nachteil dieser Anordnung ist der Innenraum zwischen der Linse und der Faser, in dem sich, insbesondere bei starken Temperaturunterschieden, wie sie im Betrieb von Sonnenkollektoren zwischen Tag und Nacht bestehen, Feuchtigkeit ansammeln bzw. Schwitzwasser an den optischen Komponenten niederschlagen kann, was zu einer wesentlichen Funktionseinschränkung führt. Zusätzliche entstehen durch den Zwischenraum höhere Verluste durch Fresnelreflexion wegen den Brechzahlübergängen.

Die US 6,299,317 offenbart eine komplexe Anordnung mit Fresnel-Linsen in einem mehrteiligen Aufbau. Auch hier entstehen durch den Wechsel des Strahlenganges zwischen verschiedenen Medien an den Grenzen des Hohlraumes zwischen der Fresnel-Linse und dem Einkoppelelement Einkoppelverluste.

In der US 6,037,535 sind wesentlich einfachere Lichtsammelelemente offenbart. Diese umfassen einen Kunststoffkörper, der an der Lichteintrittsseite eine Fresnel- Linsenstruktur sowie auf der Austrittsseite einen Lichtleiter aufweist. Um die Sonnenstrahlung zwischen der Fresnel- Linsenstruktur und dem Lichtleiter zu führen, ist die Außenseite des Kunststoffkörpers verspiegelt. Nachteilig an dieser Lösung ist die relativ geringe Lichtausbeute durch den hohen Akzeptanzwinkel.

### Darstellung der Erfindung

Der Erfindung liegt die Aufgabe zugrunde, eine optische Koppeleinheit zur Einkopplung von Sonnenlicht in Lichtwellenleiter derart auszugestalten, dass diese gegenüber dem Stand der Technik einfacher, robuster und wartungsfreier sind, so dass insgesamt die Herstellungs- und Betriebskosten reduziert werden können. Weiterhin soll der optische Wirkungsgrad verbessert werden, so dass mehr Licht mit einer höheren Konzentration und gleichzeitig unter einem größeren Eintrittswinkel in den Lichtleiter eingekoppelt werden kann.

Diese Aufgabe wird durch eine Vorrichtung nach einem der unabhängigen Ansprüche gelöst. Vorteilhafte Ausgestaltungen der Erfindung sind in den Unteransprüchen angegeben.

Ein erfindungsgemäßer Koppler ist ein einstückiges Bauteil, welches wenigstens eine Linse 51 zum Lichteintritt, eine Lichtführung 53, sowie eine Faserankopplung 56 zur Ankopplung einer Faser 57 umfasst. Die Sonnenstrahlung tritt durch die Linse 51 in den Koppler ein und wird durch die Lichtführung in Richtung auf die Faserankopplung geführt. Da der Koppler aus einem Stück besteht, ist er besonders einfach herstellbar. Er kann beispielsweise aus PMMA (Polymethylmetacrylat, beispielsweise Plexiglas) oder auch aus Glas bestehen. Er kann beispielsweise mittels Spritzguss oder Spritzprägeverfahren in großen Stückzahlen kostengünstig hergestellt werden. Weiterhin weist der Koppler vorteilhafterweise noch eine Halterung 52 auf, so dass dieser, zusammen mit einer Vielzahl anderer Koppler, auf einfache Weise in einem Träger befestigt werden kann. Der Strahlengang im Inneren des Kopplers, insbesondere im Bereich der Lichtführung, verläuft wahlweise direkt von der Linse 51 in die Faser 57. Alternativ kann er aber auch durch eine erste Konzentrationsstufe 54 sowie optional durch eine zweite Konzentrationsstufe 55 weiter in Richtung der Faser geführt werden. Die Konzentrationsstufen dienen ebenfalls zu einer Vergrößerung des Akzeptanzwinkels.

Der Querschnitt des Kopplers bzw. insbesondere der Linse ist im einfachsten Falle rund. Ebenso sind aber auch eckige, beispielsweise quadratische oder auch sechseckige Ausführungsformen denkbar. Gerade quadratische und sechseckige Ausführungsformen lassen sich besonders einfach lückenlos aneinander reihen. So können aus diesen auf einfache Weise größere Paneele gebildet werden. Besonders bevorzugt sind mehrere der Koppler zusammen zu Paneelen mit einem Spritzgusswerkzeug hergestellt. So kann beispielsweise ein Spritzgusswerkzeug eine Matrix aus dreimal drei quadratischen Kopplern herstellen. Solche Matrizen können dann wieder zu größeren Paneelen kombiniert werden.

Besonders vorteilhaft ist es, wenn sich im Inneren des Kopplers, d.h. zwischen Linse und Faser keine Luft bzw. kein Gas befindet. Damit werden auch Koppelverluste minimiert.

Zum Schutz vor Umwelteinflüssen werden die Koppler bzw. ganze Paneele bevorzugt abgedeckt. Eine solche Abdeckung kann eine eben Platte oder aber auch eine Kuppel sein.

Die Abdeck- und/oder die einzelnen Koppler sind bevorzugt mit einer Oberflächenbeschichtung versehen. Eine solche Oberflächenbeschichtung kann beispielsweise eine Antireflexschicht sein, welche beispielsweise durch Interferenz, Nanotechnik usw. unerwünschte Fresnelreflexion minimiert und somit den Wirkungsgrad des Systems verbessert. Weiterhin kann optional eine Anti- Kratzbeschichtung vorgesehen sein, welche ein Verkratzen bzw. eine mechanische Beschädigung der Oberflächen der Linsen verhindert oder reduziert.

Eine weitere vorteilhafte Beschichtung ist eine Beschichtung, welche einen Lotuseffekt ermöglicht, so dass Wasser und Schmutz nicht an der Linsenoberfläche haften bleiben. Die Optik kann somit auf einfache Weise durch Aufbringen von Wasser von Schmutz befreit werden.

Eine weitere vorteilhafte Beschichtung ist ein Infrarotschutz. Damit kann erreicht werden, dass auch bei kürzeren Faserlängen keine Wärmeübertragung beispielsweise in Räume eingebracht wird.

Ein optionaler Ultraviolettschutz verhindert einen Weitertransport von ultravioletter Strahlung. Eine ultraviolette Strahlung könnte die Bestandteile des Kopplers beschädigen, falls diese aus Kunststoff, wie PMMA, bestehen. Dies kann durch einen UV-Schutz vermieden werden. Grundsätzlich muss bei Ultraviolett- und IR-Schutz unterschieden werden, ob diese Strahlungsarten absorbiert oder reflektiert werden. Bei einer Absorption kann die dadurch entstehende Wärme noch weiter verwendet werden. Hierzu wäre dann ein Transportmedium vorzusehen, beispielsweise eine Flüssigkeit, die die Wärme von den Kopplern abführt. So können die Koppler beispielsweise in einem mit Flüssigkeit durchströmten Raum angebracht werden oder auch durch Kanäle mit einer Flüssigkeit durchströmt werden.

Die Montage des Kopplers in einen Rahmen kann vorteilhafterweise durch Einkippen, Schrauben, Pressen oder auch Kleben erfolgen. Hierzu sind wahlweise am Rahmen oder an einem erfindungsgemäßen Koppler elastische Elemente wie Rastnasen oder auch Gewinde vorgesehen.

Die erste Konzentrationsstufe 54 und/oder die zweite Konzentrationsstufe 55 können weitere optische Elemente, wie Linsen, enthalten. So ist bevorzugt im Inneren einer solchen Konzentrationsstufe eine Linse eingespritzt. Alternativ kann die Konzentration auch über unterschiedliche Materialien der Konzentrationsstufen selbst erfolgen. So kann beispielsweise ein erstes Kegelstumpfbauteil 72 mit einem linsenförmigen Ende auf ein zweites Kegelstumpfbauteil 73 mit einer hierzu passenden Form aufgesetzt sein. Durch eine geeignete Auswahl des Brechzahlunterschieds sowie der linsenförmigen Form kann der Strahlengang gesteuert werden.

Entsprechend einer weiteren Ausgestaltung kann auch eine Gradientenoptik, ähnlich einer GRIN- Linse eingesetzt werden.

Eine weitere Ausgestaltung der Erfindung sieht eine reflektive Optik mit Spiegeln oder reflektiven Beschichtungen vor.

In einer weiteren vorteilhaften Ausgestaltung der Erfindung wird eine lichtleitende Faser 57 formschlüssig mit dem Koppler 30 im Bereich der Faserankopplung 56 verbunden.

Weitere vorteilhafte Verfahren sind eine Schraubverbindung, eine Klemmverbindung, ein Anspritzen der Faser. Vorteilhafterweise ist eine Zugentlastung der Faser, beispielsweise mit Klemmschalen, vorgesehen.

Besonders günstig ist es, wenn die lichtleitende Faser 57 eine POF (Polymer Optical Fiber) ist. Diese hat den Vorteil, dass sie eine sehr große numerische Apertur besitzt. Weiterhin wird durch den Kunststoff der ultraviolette Anteil absorbiert und der infrarote Anteil stark gedämpft. Somit wird keine Wärme in das Innere eines Gebäudes geleitet. Ein weiterer Vorteil ist die hohe Robustheit und Flexibilität. Nachteilig sind die geringen Distanzen, die überbrückt werden können (Größenordnung 20 m).

Das Licht lässt sich mit Glasfasern über wesentlich größere Distanzen transportieren, da diese eine geringere Dämpfung als POF aufweisen. Allerdings sind diese Glasfasern wesentlich empfindlicher. Weiterhin transportieren sie die zumindest zur Raumbeleuchtung unterwünschten infraroten und ultravioletten Lichtanteile weiter, so dass spezielle Filter hierfür vorgesehen werden müssten. Die Lichtführung 53 hat eine Eintrittseite 58 sowie eine Gegenseite 59 für das Sonnenlicht und ist vorzugsweise ungefähr ein Kegelstumpf, wobei die Eintrittseite eine größere Fläche als die Gegenseite aufweist. Angepasst an die Geometrie der Linse oder des ganzen Kopplers kann die Lichtführung auch einen quadratischen, sechseckigen oder jeden anderen Querschnitt aufweisen. Sie kann auch eine zylindrische oder quaderförmige Struktur haben. Wesentlich ist eine Abbildung des Lichtes von der Eintrittseite auf die Gegenseite.

Mit einem erfindungsgemäßen Koppler lässt neben Sonnenstrahlung auch Strahlung vom Mond oder von anderen Lichtquellen, welche vorzugsweise eine parallele Abstrahlcharakteristik aufweisen, sammeln.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
- Figur 1: zeigt eine Erfindungsgemäße Vorrichtung
- Figur 2: zeigt einen Koppler ohne Konzentrationsstufe
- Figur 3: zeigt einen Koppler mit einer Konzentrationsstufe
- Figur 4: zeigt einen Koppler mit zwei Konzentrationsstufen
- Figur 5: zeigt einen Koppler mit eingebetteter Linse
- Figur 6: zeigt einen Koppler mit linsenförmigem Lufteinschluss
- Figur 7: zeigt einen Koppler mit linsenförmigem Übergang zwischen zwei unterschiedlichen Materialien
- Figur 8: zeigt einen Koppler mit Gradientenoptik
- Figur 9: zeigt einen Koppler mit CPC Optik
- Figur 10: zeigt einen Koppler mit CPC Optik und zusätzlicher Linse
- Figur 11: zeigt einen Koppler mit HPC Optik
- Figur 12: zeigt einen Koppler mit HPC Optik und zusätzlicher Linse
- Figur 13: zeigt einen Koppler mit Spiegel an der Unterseite
- Figur 14: zeigt einen Koppler mit asphärischem Spiegel an der Unterseite
- Figur 15: zeigt einen Koppler mit doppelt gefaltetem Strahlengang
- Figur 16: zeigt einen Koppler mit doppelt gefaltetem Strahlengang und asphärischen Spiegeln
- Figur 17: zeigt einen Koppler mit dreifach gefaltetem Strahlengang und asphärischen Spiegeln
- Figur 18: zeigt einen Koppler mit einfach abbildendem Spiegel
- Figur 19: zeigt einen Koppler mit doppelt abbildenden Spiegeln
- Figur 20: zeigt einen Koppler mit einfach gefaltetem Strahlengang und Infrarot-Auskopplung
- Figur 21: zeigt einen Koppler mit einfach gefaltetem Strahlengang mit asphärischem Spiegel und Infrarot-Auskopplung
- Figur 22: zeigt einen Koppler mit Finnen zur mechanischen Versteifung
- Figur 23: zeigt eine Anordnung mit zylindrischer Lichtführung
- Figur 24: zeigt einen Koppler mit einer Faser in einer Hülse
- Figur 25: zeigt einen Koppler mit einer Bohrung zum Einkleben einer Faser
- Figuren 26a-c: zeigen einen Faseranschluss mit Konus
- Figuren 27a-c: zeigen einen Faseranschluss mit CPC Optik
- Figur 28: zeigt zwei Panels mit sechseckigen Kopplern
- Figur 29: zeigt eine Anordnung mit flüssigkeitsgekühlten Kopplern
- Figur 33: zeigt einen erfindungsgemäßen Sonnenkollektor

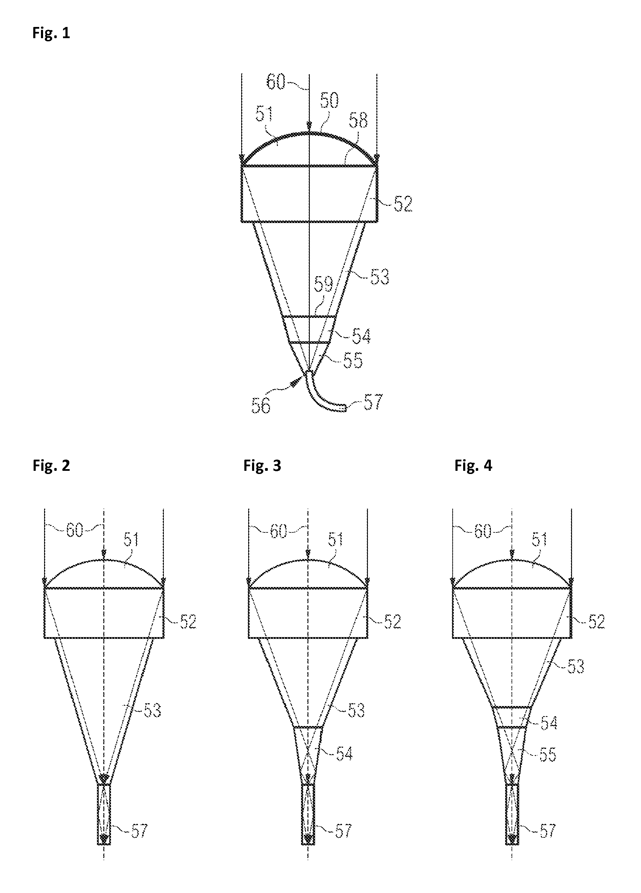

In Fig. 1 ist ein Koppler, entsprechend der Erfindung dargestellt. Lichtstrahlung 60 tritt durch die Oberfläche 50 über eine Linse 51 in eine Lichtführung 53 ein. Das Licht wird hier in Richtung auf eine optische Faser 57 geführt. Zur Konzentration des Lichtbündels sind eine erste Konzentrationsstufe 54 sowie eine zweite Konzentrationsstufe 55 vorgesehen. Um den Koppler in einem hier nicht dargestellten Rahmen zu befestigen, ist eine Halterung 52 vorgesehen. Dies kann beispielsweise ein zylinderförmiger Schaft sein. Zur Aufnahme der lichtleitenden Faser 57 ist eine Faserankopplung 56 vorgesehen.
In Fig. 2 ist eine besonders einfache Ausgestaltung der erfindungsgemäßen Anordnung dargestellt. Der Koppler weist an seinem oberen Ende eine Linse 51 auf. Von dort wird Licht 60 der Lichtführung 53 in die lichtleitende Faser 57 geführt. Zur Montage ist noch eine Halterung 52 vorgesehen.
In Fig. 3 ist eine erfindungsgemäße Anordnung mit einer Konzentrationsstufe. Hier ist zwischen der Lichtführung 53 und der lichtleitenden Faser 57 eine erste Konzentrationsstufe 54 vorgesehen, wodurch das Licht aus der Lichtführung 53 nochmals weiter auf den Faserdurchmesser konzentriert wird.
Fig. 4 zeigt eine weitere Anordnung mit zwei Konzentrationsstufen. Zwischen der Lichtführung 53 und der lichtleitenden Faser 57 sind eine erste Konzentrationsstufe 54 und eine zweite Konzentrationsstufe 55 vorgesehen.

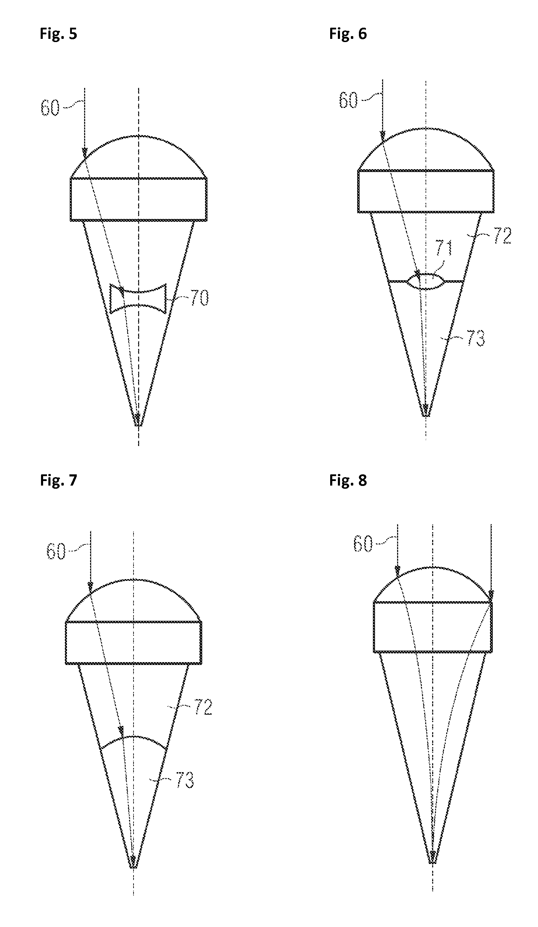

In Fig. 5 ist eine Ausführungsform der Erfindung mit einer integrierten bikonkaven Linse 70 gezeigt. Diese Linse 70 hat eine höhere Brechzahl als das umgebende Medium der Lichtführung. Die Linse kann beispielsweise aus Glas bestehen und ist dann in eine Lichtführung aus PMMA eingespritzt. Die Linse kann auch wahlweise eine plankonkaven oder bikonvexe oder plankonvexe Linse (je nach Brechzahl des Linsenmediums) sein.
Fig. 6 zeigt ein weiteres Ausführungsbeispiel der Erfindung mit einer bikonvexen Linse, welche beispielsweise als Lufteinschluss (oder auch als Einschluss eines anderen Mediums) realisiert ist. So kann ein erstes Kegelstumpfbauteil 72 mit einer konvexen Ausnehmung mit einem zweiten Kegelstumpfbauteil 73 mit einer hierzu passenden zweiten konvexen Ausnehmung kombiniert werden, so dass eine Linse 71 mit niedriger Brechzahl gebildet wird.
Fig. 7 zeigt eine weitere Ausgestaltung, bei der verschiedene Kunststoffmaterialien miteinander kombiniert werden. So könnte beispielsweise der obere Teil mit dem ersten Kegelstumpfbauteil 72 aus PMMA und der untere Teil mit dem zweiten Kegelstumpfbauteil 73 aus Polycarbonat bestehen. Das erste Kegelstumpfbauteil 72 weist hier eine konkave Wölbung auf, während das zweite Kegelstumpfbauteil 73 eine hierzu passende konvexe Wölbung hat.
In Fig. 8 ist eine Gradientenoptik dargestellt. Das Licht wird hier durch einen fließenden Brechzahlübergang von der Eintrittsstelle bis zur Faser geleitet. Der Aufbau könnte ähnlich wie bei einer GRIN- Linse sein.

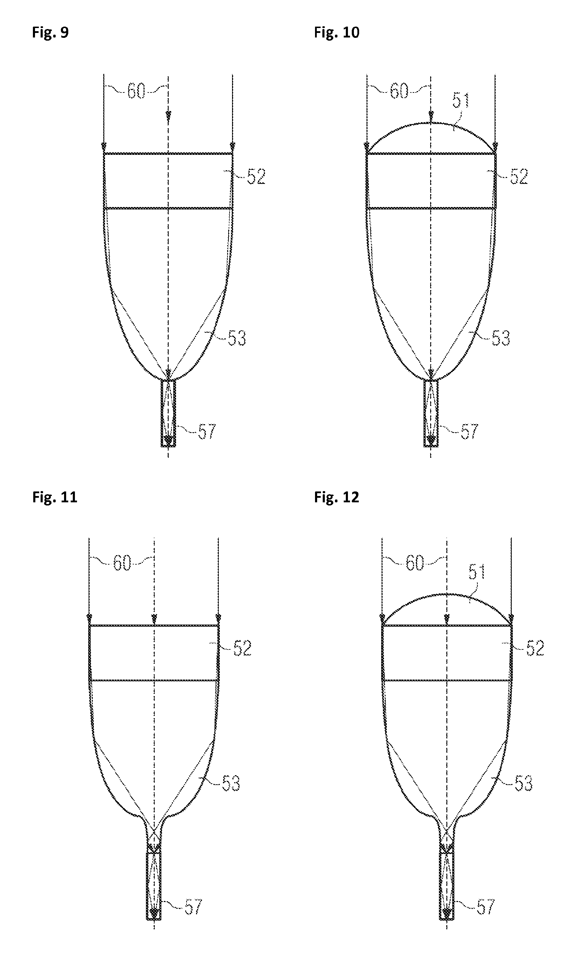

In Fig. 9 ist eine Anordnung mit CPC-Geometrie dargestellt. Hier wird eine Linse an der Eintrittsseite nicht benötigt. Licht tritt unmittelbar in die Lichtführung mit CPC-Geometrie ein und wird in die lichtleitende Faser 47 geleitet.

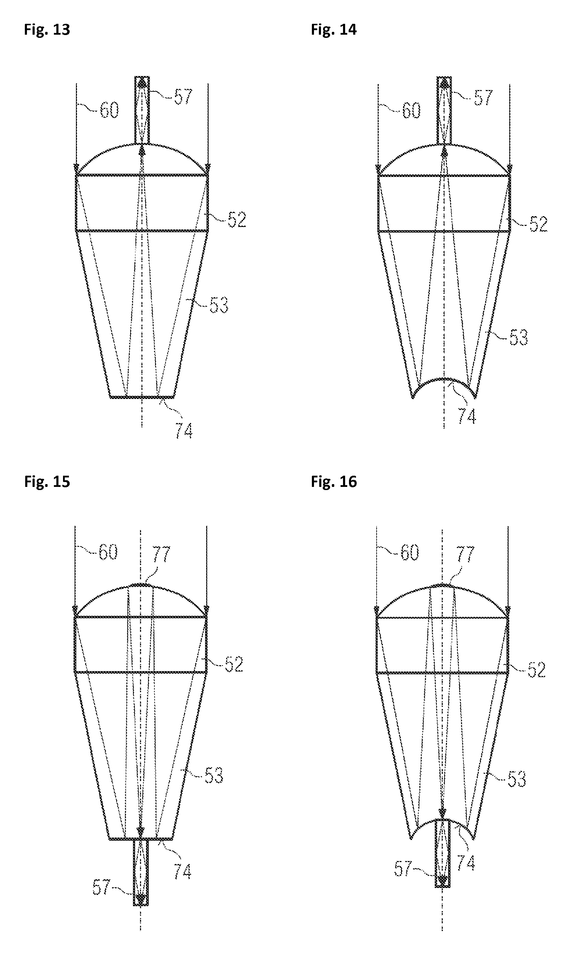

Fig. 10 zeigt eine Anordnung, wie in Fig. 9, es ist hierbei jedoch noch eine zusätzliche Linse 51 an der Oberseite zum Lichteintritt vorgesehen. Grundsätzlich wären auch zwei CPCs hintereinander bei einer Anordnung nach Fig. 12 oder 13 realisierbar.
Fig. 11 zeigt eine weitere Anordnung mit einer HPC- Geometrie.
Fig. 12 zeigt eine Anordnung nach Fig. 11, wobei eine zusätzliche Linse 51 auf der Eintrittsseite vorgesehen ist.
Fig. 13 zeigt einen Koppler mit einem gefalteten Strahlengang. Licht 60 tritt durch eine obere Linse 51 in die Lichtführung 53 ein und wird an der reflektierenden Fläche 74 zurück in die eintrittsseitig angeordnete lichtleitende Faser 57 reflektiert.
Fig. 14 zeigt eine Anordnung, ähnlich derjenigen aus Fig. 13, wobei an der Unterseite ein asphärischer Spiegel 74 vorgesehen ist.
Fig. 15 zeigt eine Anordnung mit doppelter Faltung. Hier wird, entsprechend der Fig. 13, Licht von der Eintrittslinse über eine reflektierende Fläche 74 auf einen eintrittsseitig angeordneten reflektierten Bereich 77 geleitet. Von dort wird das Licht wiederum zurück auf die auf der Unterseite angeordnete Faser 57 geleitet.
Fig. 16 zeigt eine Anordnung analog zu Fig. 15, jedoch ist hierbei die reflektierende Fläche 74 als asphärischer Spiegel ausgebildet.

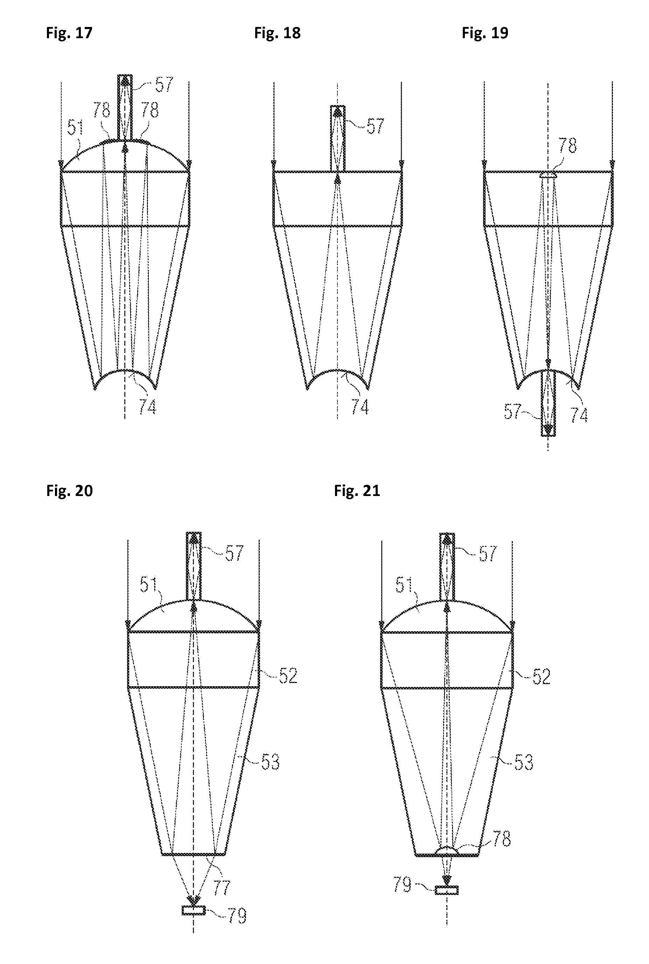

Fig. 17 zeigt eine dreifach gefaltete Anordnung. Hierbei wird Licht von der oberen Eintrittsseite über die reflektierende Fläche 74, zurück auf die Eintrittsseite, von dort wieder über Spiegel 78 auf die reflektierende Fläche 74 und von dort wiederum zurück auf die lichtleitende Faser 57 reflektiert.
Fig. 18 zeigt eine Anordnung mit einem einfach reflektierenden Spiegel 74 auf der Unterseite. Dieser ist ähnlich einem Newton-Teleskop. Eine Kombination mit einer hier nicht dargestellten Linse 51 ist möglich.
Fig. 19 zeigt eine Anordnung zwei abbildenden Spiegeln 74 und 78, ähnlich einem Cassegrain- Teleskop. Auch hier kann noch eine zusätzliche Linse 51 vorgesehen werden.
Fig. 20 zeigt eine IR-Version, bei der infrarotes Licht über die wellenlängenselektive Fläche 77 an den Absorber 79 ausgeleitet wird. Sichtbares Licht wir weiter in den Lichtleiter 57 geführt.

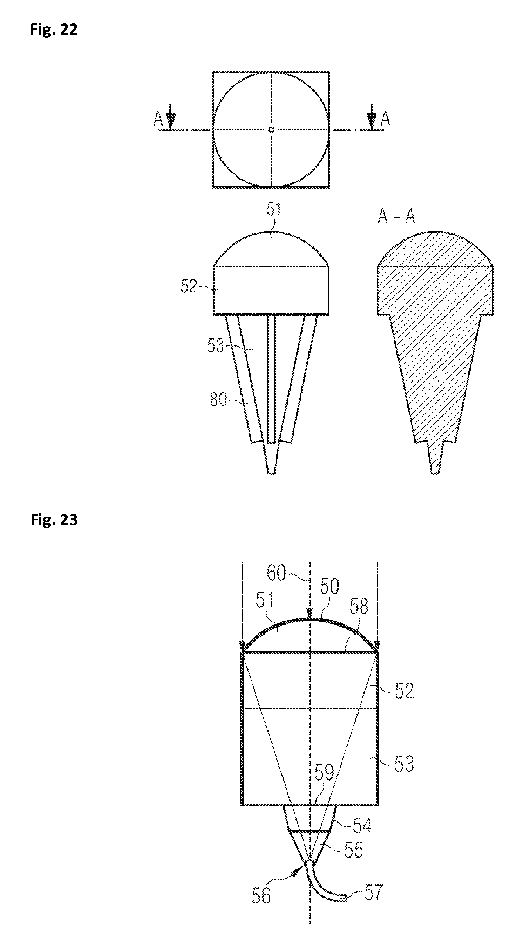

Fig. 21 zeigt eine weitere Ausführung einer IR-Version. Es wird hierbei das infrarote Licht durch einen reflektierenden Bereich in Fig. 23 sowie durch einen ersten Spiegel 78, welche wellenlängenselektiv sind, auf einen Infrarot- Absorber 79 ausgeleitet. Der Absorber kann in den hier gezeigten Beispielen von einem Kühlmedium wie Wasser gekühlt werden, oder über eine PV-Zelle für infrarote Strahlung Strom erzeugen.
In der Fig. 22 ist noch eine besonders vorteilhafte Ausführungsform der Erfindung dargestellt. Es sind hier zur Versteifung des Körpers des Kopplers zusätzliche Finnen 80 an den Außenseiten vorgesehen. Mit derartigen Versteifungen kann beispielsweise ein durch Spritzguss hergestellter Körper durch Tempern behandelt werden. Hierbei wird er einer erhöhten Temperatur über eine bestimmte Zeit ausgesetzt. Dadurch homogenisiert sich das durch den Druckverlauf des Spritzgießens inhomogen hergestellte Polymergefüge. Entsprechend homogenisiert sich auch die Verteilung der Brechzahlen im Inneren. Somit lassen sich definiertere optische Abbildungseigenschaften erreichen. Da beim Tempern durch die Homogenisierung gleichzeitig eine Verformung des Körpers auftritt, ändert sich die äußere Geometrie. Dies kann beim Auslegen der Spritzgussform und den Angusspositionen bereits berücksichtigt werden. Eine zusätzliche Stabilisierung durch die Finnen bringt hier ebenfalls eine Verbesserung.
In Figur 23 ist eine Anordnung mit zylindrischer Lichtführung dargestellt. Wesentlich ist die Abbildung der Lichtstrahlen von der Eintrittseite 58 auf die Austrittseite 59.

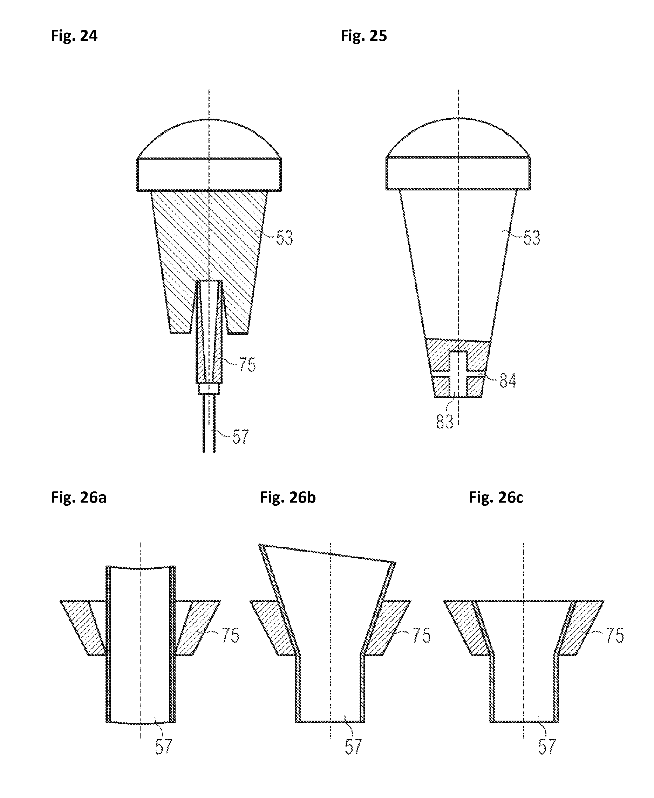

Figur 24 zeigt einen Koppler mit einer Faser 57, die in einer Hülse 75 mit Konus aufgenommen ist. Zur exakten Positionierung der Hülse ist in dem Körper des Kopplers bzw. in der Lichtführung 53 eine Bohrung 83 vorgesehen.
Figur 25 zeigt einen Koppler mit einer Bohrung 83 zur Aufnahme einer lichtleitenden Faser und einer weiteren durch diese hindurchgehenden Zuführungsbohrung 84 für Klebstoff. Hier kann die Faser direkt in die Bohrung 83 eingeführt werden. Danach kann Klebstoff durch die Zuführungsbohrung 84 zugeführt werden oder zuvor eingebrachter überflüssiger Klebstoff entweichen.
Die Fig. 26a-c zeigen die Befestigung der lichtleitenden Faser 57 an dem Koppler mittels einer Hülse mit Konus, wie sie beispielsweise in einer Anordnung nach Fig. 25 eingesetzt werden kann. Zur besseren Darstellung ist hier die Hülse in der Länge stark gestaucht dargestellt. In der Fig. 26a ist die lichtleitende Faser durch die konische Bohrung der Hülse 75 geschoben. Danach wird die Faser erhitzt. Dies kann beispielsweise durch Heißluft, Wasserdampf oder auch Infrarotstrahlung erfolgen. Dabei dehnt sich die Faser aus und übernimmt die Geometrie der Bohrung, wie in Fig. 26b dargestellt. Abschließend wird das Ende der Faser poliert, so dass, wie in Fig. 26c gezeigt, die Faser bündig mit der oberen Kante der Hülse 75 abschließt. Dieses Teil kann nun in Position der Faserankopplung 56 mit dem Koppler verbunden werden.

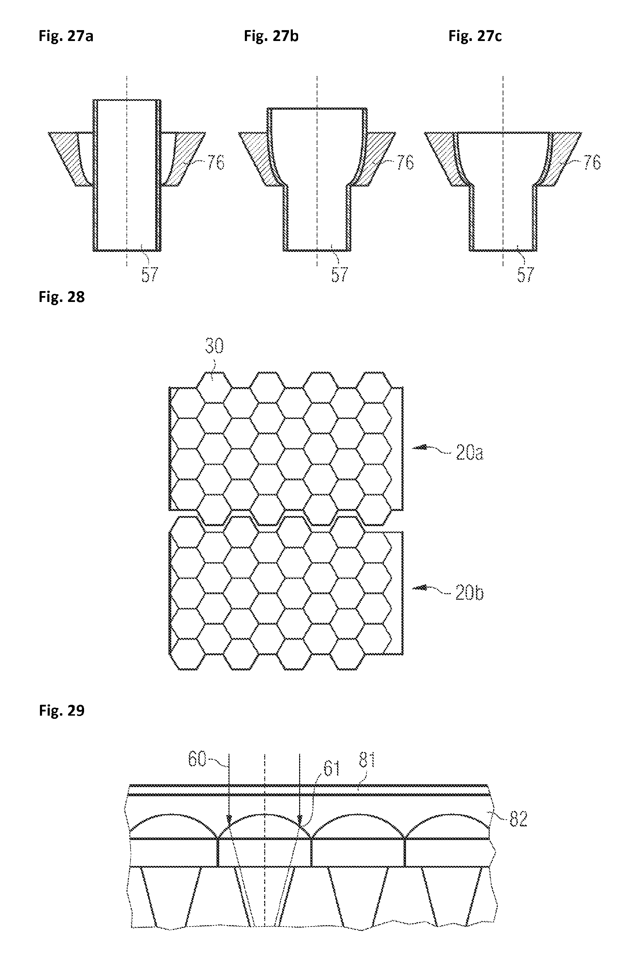

In den Fig. 27a-c ist eine weitere Faserbefestigung, ähnlich der in Fig. 26, dargestellt. Anstelle der Hülse 75 mit Konus wird eine Hülse 76 mit CPC-Form verwendet. Hierdurch ergibt sich eine CPC-Geometrie der Faser.
In Fig. 28 ist eine Anordnung zweier Paneele 20a, 20b mit einer Vielzahl von Kopplern 30 dargestellt. Diese Koppler haben einen sechseckigen Querschnitt und können somit platzsparend aneinander gefügt werden.
Fig. 29 zeigt eine Anordnung mehrerer Koppler mit einer Flüssigkeitskühlung. Licht 60 tritt durch eine Abdeckung 81 in den Innenraum mit den Kopplern ein. Der infrarote und gegebenenfalls der ultraviolette Anteil werden mit einer selektiven Oberflächenbeschichtung in den Zwischenraum rückreflektiert bzw. durch die Beschichtung in Wärme umgewandelt. Die Wärmeumwandlung kann auch durch das Material der Koppler selbst erfolgen. Zur Wärmeabfuhr ist in dem Zwischenraum zwischen der Abdeckung und den Kopplern eine Kühlflüssigkeit 82 vorgesehen.

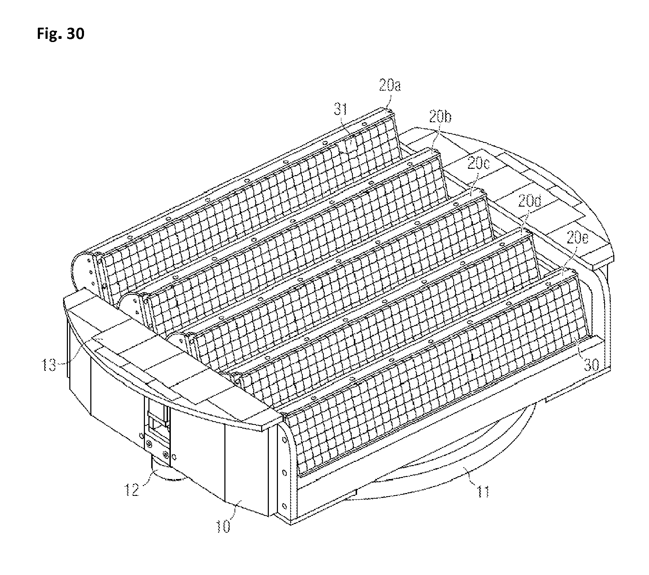

In Figur 30 ist ein erfindungsgemäßer Sonnenkollektor dargestellt. Der Sonnenkollektor umfasst einzelne Paneele 20a, 20b, 20c, 20d, 20e. Diese Paneele sind in einem Rahmen 10 schwenkbar gelagert. Der Rahmen selbst ist auf dem Führungsring 11 drehbar gelagert und kann mittels eines Antriebs 12 gedreht werden. Der Führungsring 11 ist fest auf einer Montagefläche, wie beispielsweise einem Hausdach, einem Flachdach oder einer Wand montiert. Die einzelnen Paneele 20a bis 20e umfassen eine Vielzahl von Kopplern 30 zur Bündelung von Sonnenstrahlung in einzelne lichtleitende Fasern. Ein optionaler Sonnensensor 31 ist fest auf der Oberfläche eines Paneels montiert und wird zusammen mit diesem bewegt. Er dient zur exakten Erkennung der Sonnenposition und damit zur exakten Nachführung der Paneele. Zur Gewinnung elektrischer Energie, beispielsweise für den Nachführantrieb können optional noch Solarzellen 13 vorgesehen sein.

In der Beschreibung wird auf die Positionen oben bzw. unten Bezug genommen. Dies ist relativ zu einem normalen Einsatz der Koppler zu sehen, bei dem die Sonne oben steht. Oben steht hier grundsätzlich für die Lichteintrittseite, während unten die gegenüberliegende Seite bezeichnet.

Weiterhin wird aus Gründen der Anschaulichkeit auf den Begriff der lichtleitenden Faser Bezug genommen, da in den meisten Ausgestaltungen der Erfindung tatsächlich eine solche Faser zum Einsatz kommt. Allerdings könnte anstelle einer solchen Faser auch ein Bündel aus mehreren Fasern sowie auch andere Lichtleiter, wie Flüssigkeits-Lichtleiter zum Einsatz kommen.

### Bezugszeichenliste

- 10: Rahmen
- 11: Führungsring
- 12: Antrieb
- 13: Solarzellen
- 20a-e: Paneel
- 30: Koppler
- 31: Sonnensensor
- 50: Oberfläche
- 51: Linse
- 52: Halterung
- 53: Lichtführung
- 54: erste Konzentrationsstufe
- 55: zweite Konzentrationsstufe
- 56: Faserankopplung
- 57: Faser
- 58: Eintrittseite
- 59: Gegenseite
- 60: Lichtstrahlen
- 61: reflektierte Infrarotstrahlung
- 70: Linse mit höherer Brechzahl
- 71: Linse mit niedrigerer Brechzahl
- 72: erstes Kegelstumpfbauteil
- 73: zweites Kegelstumpfbauteil
- 74: reflektierende Fläche
- 75: Hülse mit Konus
- 76: Hülse mit CPC-Form
- 77: reflektierender Bereich
- 78: Spiegel
- 79: Absorber
- 80: Finne
- 81: Abdeckung
- 82: Kühlflüssigkeit
- 83: Bohrung

## Patentansprüche

1. Koppler zur Einkopplung von Sonnenlicht (60) in eine Faser (57) aus einem Block aus lichtleitendem Material umfassend
- eine Oberfläche (50) zum Lichteintritt,
- eine Lichtführung (53) mit einer Eintrittseite (58) und einer Gegenseite (59), welche auf der Eintrittseite eintretendes Licht auf die Gegenseite abbildet,
- eine Linse (51) zwischen der Oberfläche (50) und der Eintrittseite (58) der Lichtführung (53), sowie
- eine Faserankopplung (56) zur Ankopplung der Vorrichtung an die Faser (57).

2. Koppler zur Einkopplung von Sonnenlicht (60) in eine Faser (57) aus einem Block aus lichtleitendem Material umfassend
- eine Oberfläche (50) zum Lichteintritt,
- eine Lichtführung (53) mit einer Eintrittseite (58) und einer Gegenseite (59), welche auf der Eintrittseite eintretendes Licht auf die Gegenseite abbildet,
- eine Linse (70, 71) die einen anderen Brechungsindex als die Lichtführung (53) aufweist, in die Lichtführung (53) eingebettet ist, sowie
- eine Faserankopplung (56) zur Ankopplung der Vorrichtung an die Faser (57).

3. Koppler zur Einkopplung von Sonnenlicht (60) in eine Faser (57) aus einem Block aus lichtleitendem Material umfassend
- eine Oberfläche (50) zum Lichteintritt,
- eine Lichtführung (53) mit einer Eintrittseite (58) und einer Gegenseite (59), welche auf der Eintrittseite eintretendes Licht auf die Gegenseite abbildet,
- eine Faserankopplung (56) zur Ankopplung der Vorrichtung an die Faser (57), sowie
- eine erste Konzentrationsstufe (54) und wahlweise eine zweite Konzentrationsstufe (55) zwischen der Gegenseite (59) der Lichtführung (53) und der Faserankopplung (56).

4. Koppler nach Anspruch 1, 2 oder 3,
**dadurch gekennzeichnet, dass**
die Lichtführung (53) eine Gradientenoptik, eine CPC oder eine HPC Optik aufweist.

5. Koppler nach einem der vorhergehenden Ansprüche,
**dadurch gekennzeichnet, dass**zwischen der Gegenseite (59) der Lichtführung (53) und der Faserankopplung (56) eine erste Konzentrationsstufe (54) und wahlweise eine zweite Konzentrationsstufe (55) angeordnet ist.

6. Koppler nach einem der vorhergehenden Ansprüche,
**dadurch gekennzeichnet, dass**
die Gegenseite (59) der Lichtführung (53) zumindest teilweise als reflektierende Fläche (74) ausgeführt ist.

7. Koppler nach einem der vorhergehenden Ansprüche,
**dadurch gekennzeichnet, dass**
zwischen der Oberfläche (50) und der Eintrittseite (58) der Lichtführung (53) eine Linse (51) angeordnet ist.

8. Koppler nach einem der vorhergehenden Ansprüche,
**dadurch gekennzeichnet, dass**
in die Lichtführung (53) eine Linse (70, 71) mit einem anderen Brechungsindex als die Lichtführung eingebettet ist.

9. Koppler nach einem der vorhergehenden Ansprüche,
**dadurch gekennzeichnet, dass**
der Koppler aus Glas oder UV-stabilisierten Kunststoff besteht.

10. Koppler nach einem der vorhergehenden Ansprüche,
**dadurch gekennzeichnet, dass**
am oder im Koppler eine IR-Schutzabdeckung oder ein IR-Filter vorgesehen ist.

11. Sonnenkollektor umfassend wenigstens zwei Koppler nach einem der vorhergehenden Ansprüche.
